# EUROPEAN PATENT SPECIFICATION

(11) **EP 1 531 118 B1**
(45) Date of publication and mention of the grant of the patent: **06.05.2009**
(21) Application number: 04001030.8
(22) Date of filing: 19.01.2004
(51) Int. Cl.: B62J 1/26

(54) **Bicycle saddle**
Fahrradsattel
Selle de bicyclette

(30) Priority: 17.11.2003 CN 03101135
(43) Date of publication of application: 18.05.2005
(73) Proprietor: Velo Enterprise Co., Ltd., Dajia Township, Taichung County 437 (TW)
(72) Inventor: Yu, Tsai-Yun, Taichung Hsien (TW)
(74) Representative: Becker Kurig Straus

(56) References cited:
- BE-A- 390 319
- DE-A1- 10 036 925
- DE-U1- 29 907 473
- FR-A- 1 050 065
- GB-A- 258 017
- US-A- 654 720
- US-A- 2 324 976
- US-A- 5 720 518

## Description

### BACKGROUND OF THE INVENTION

### 1. Field of the Invention

The present invention relates generally to a bicycle saddle and, more particularly to an improved bicycle saddle, which not only reduces vibration and absorbs shock during riding, but also evenly distributes the pressure from the rider placed on the seating surface of the saddle.

### 2. Description of the Related Art

When riding a bicycle, the rider will receive a regular transmission of energy periodically for contacting with a surface having rapid rhythmic movement back and forth. This transmission of energy is the so-called vibration, which will causes fatigue. The riders, for example, may suffer fatigue from vibration inflicted by a bicycle driven at higher speeds over a hard surface, such as a paved street.

Shock herein said is a transfer of high amplitude energy to a person, which can cause serious trauma--tissues or bones may be fractured or crushed instantly upon impact with a hard surface. Shock is likely to occur, for example, when one rides a bicycle over a rough surface, such as an unpaved road, an abrupt displacement of the vehicle is transmitted directly through the rigid frame, seat, and control surfaces to the rider.

Commercially available bicycle saddles primarily consist of an injection molded plastic shell carrier shaped to form the basic profile then covered with a layer of padding, usually a polyurethane foam and a protective cover.

In order to reduce vibration, it is suggested to interpose an energy absorbing medium between the vibrating surface and the body. Gel-like viscoelastic materials have been used as an energy absorbing medium. Such materials are generally incompressible and exhibit both viscous and elastic properties. When subjected to vibration, viscoelastic materials produce a retardation of the effect of the forces acting on the body, which introduces hysteresis into the cycle, and represents a loss of resilient energy. This reduces or dampens vibration. However, gel-like viscoelastic materials also have proven difficult to use because they are heavy, and do not absorb shock adequately due to their relative incompressibility.

In order to absorb shock, sprung saddles have been developed, which include coil springs inserted between the underside of the saddle shell and the rails which mount the saddle to the seat post to attenuate the shock load. However, for being too heavy, sprung saddles are only suitable for regular bicycles, not practical for racing bicycles or mountain bikes.

US 654,720 A shows a bicycle saddle according to the preamble of claim 1.

Accordingly, what is needed is a bicycle saddle that is lightweight and capable of damping vibration, absorbing shock and evenly distributing pressure.

### SUMMARY OF THE INVENTION

A bicycle saddle in accordance with the present invention is defined in claim 1, and generally includes a rigid/semi-rigid shell functioning as a supporting structure for the bicycle saddle. A covering is disposed on the shell and attached thereto, with a padding between the shell and the covering.

The padding may comprise a cushion made of a resilient material, the cushion having a plurality of cavities and attached to the top of the shell such that the cavities would work as pneumatic cushions with air cushions/ air springs interposing between said shell and the rider's body.

The novel bicycle saddle disclosed herein, by means of the aforesaid arrangement, therefore provides a seating surface having a soft medium to reduce vibration and a pneumatic cushion to absorb shock and evenly distribute pressure, thereby reducing rider fatigue.

### BRIEF DESCRIPTION OF THE DRAWINGS

The advantages and features of the present invention will be better understood by the following description when considered in conjunction with the accompanying drawings, in which:
FIG. 1 is a perspective view of a bicycle saddle with a portion cut away in accordance with an embodiment of the present invention;
FIG. 2 is a sectional view of the embodiment taken along line 2-2 of FIG. 1;
FIG. 3 is a top view of the shell attached with the cushion of the embodiment;
FIG. 4 is a bottom view of the shell of the embodiment;
FIG. 5 is a sectional view of a bicycle saddle in accordance with a second embodiment of the present invention; and
FIG. 6 is a sectional view of a bicycle saddle in accordance with a third embodiment of the present invention.

### DETAILED DESCRIPTION OF THE INVENTION

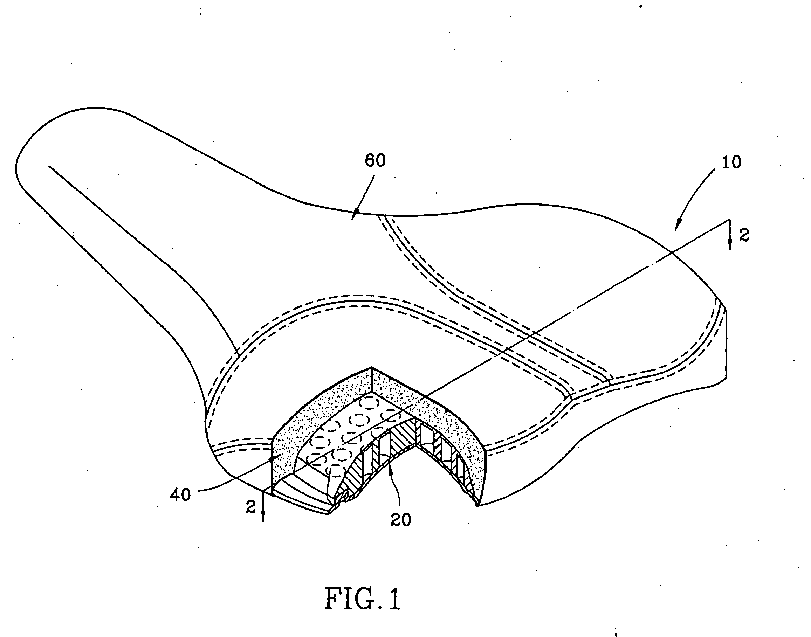

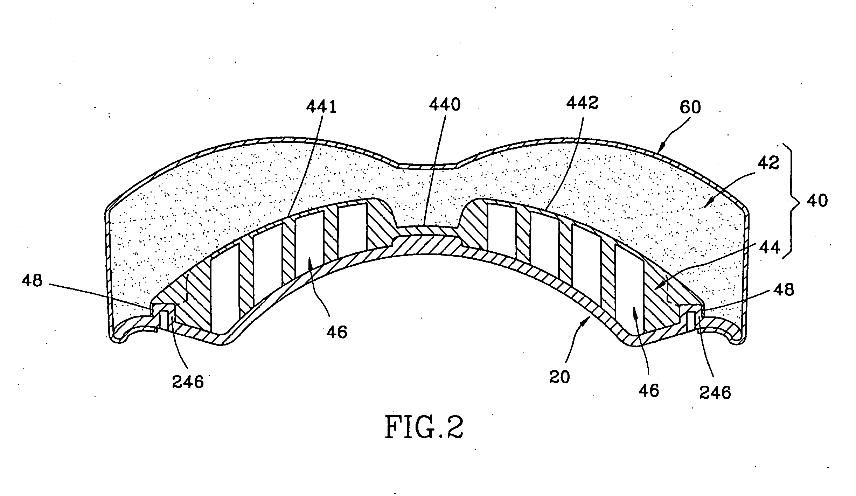

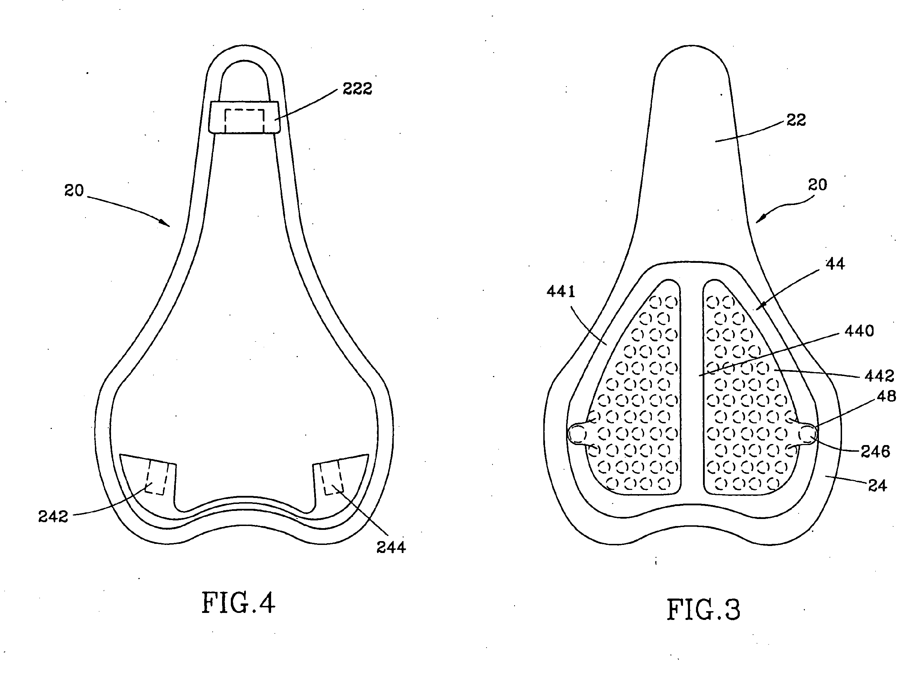

Referring to FIGS. 1-4, a bicycle saddle 10 in accordance with the present invention is shown comprising a shell 20, a padding 40, and a protective covering 60.

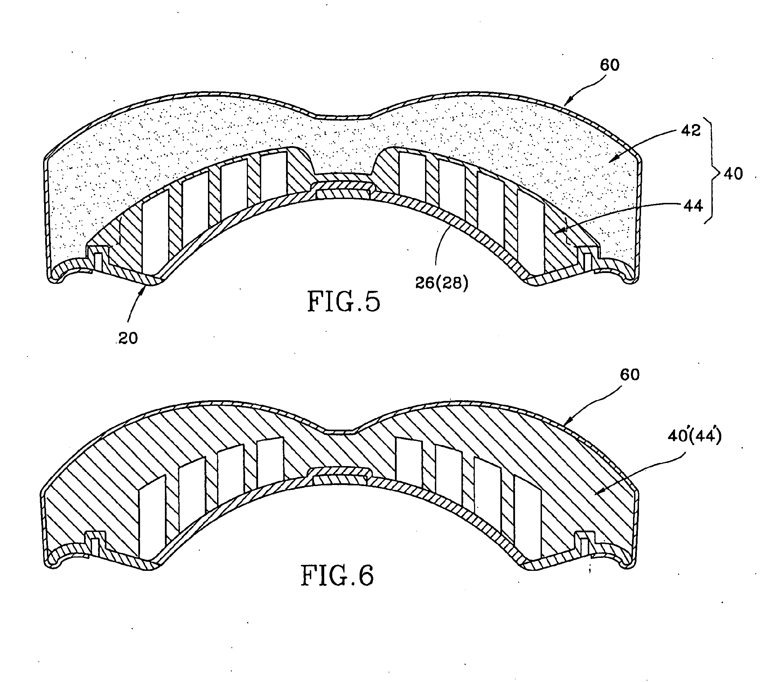

The shell 20 is made of a rigid plastic material by molding, forming the supporting structure and profile of the bicycle saddle 10. The shell 20 has a nose-like front end 22 and a relatively wider rear end 24 backwardly extended from the front end 22. The shell 20 can be made according to US Patent No. 6,095,601, i.e., the shell 20 is provided with a shock absorbing area comprising two receiving spaces 26 and filler means 28 formed of a plastic material of hardness lower than the shell 20 (shown in FIG. 5). The front end 22 has a front plug hole 222 in the underside thereof. The rear end 24 has two rear plug holes 242 and 244 arranged on the edge thereof. The front plug hole 222 and the rear plug hole 242 and 244 are adapted to receive a rail (not shown).

The padding 40 includes a plastic foam layer 42 and a cushion 44. The cushion 44 is made of a resilient material, such as plastics, rubber, silicone gels, vinyl plastisols, polyurethane elastomers, or any suitable material that has a rate of deformation being proportional to the applied stress. The cushion 44 has a central depression 440 arranged longitudinally along the top of the cushion 44 dividing the cushion 44 into a left part 441 and a right part 442.

The thickness of the cushion 44 is gradually greater from the depression 440 toward the two opposite lateral sides thereof. A plurality of cylindrical cavities 46 are independently symmetrically formed in the left part 441 and the right part 442. Each of the cavities 46 has an open end formed on the bottom of the cushion 44, and a depth being proportional to the thickness of the cushion 44.

The cushion 44 having a shape corresponding to the rear end 24 is directly attached to the upper surface of the rear end 24 and fixed thereon by fitting the two rear locating aperture 48 of the cushion 44 to the corresponding locating rods 246 at the rear end 24 of the shell 20. The plastic foam layer 42 is covered on the top of the cushion 44 and the upper surface of the front end 22 of the shell 20. Of course, the padding 40 can only be the cushion 44 as shown in FIG. 6.

The protective covering 60 can be made of leather or plastic sheet material. The protective covering 60 is stretched over the padding 40 and secured to the underside of the shell 20. The upper surface of the covering 60 of course provides the seating surface that the rider sits on.

As mentioned, the cushion 44 sandwiched in between the shell 20 and the plastic foam layer 42 would work as an energy absorbing medium interposing between the vibrating surface and the body. This lowers the amplitude of the vibration on the body, which, consequently reduces the amount of energy that is transferred. The cylindrical cavities 46 with the open ends attached to the upper surface of the shell 20 would work as many pneumatic cushions/air springs interposing between the vibrating surface and the body. This provides satisfactory shock absorption and distribution of pressure.

While the present invention has been described in connection with certain preferred embodiments, it is to be understood that the subject matter encompassed in the present invention is not to be limited to those specific embodiments, but is defined in the appended claims.

## Claims

1. A bicycle saddle (10) comprising:
a rigid/semi-rigid shell (20) having an upper surface and an underside, said shell (20) having a narrow front end and a wide rear end;
a protective covering (60);
a padding (40) disposed between said shell (20) and said covering (60); said padding (40) comprising a cushion (44) made of a resilient material, said cushion (44) having a plurality of cavities (46) and attached to the upper surface of said shell (20) such that said cushion (44) would work as pneumatic cushions with air cushions/air springs interposing between said shell (20) and the rider's body, said cushion (44) being arranged on the upper surface of said rear end, said cushion (44) including a central depression (440) running longitudinally along the top side of said cushion (44) to divide said cushion (44) into a left part and a right part,
**characterized in** each of said parts of said cushion (44) having a thickness being gradually greater from said depression (440) toward the opposite lateral sides thereof.

2. The bicycle saddle as claimed in claim 1, wherein said padding (40) further comprises a plastic foam layer (42) disposed between said cushion and said covering.

3. The bicycle saddle as claimed in claim 1, wherein said cushion is made of a flexible plastic material.

4. The bicycle saddle as claimed in claim 1, wherein said cushion has a top side connected with said covering and a bottom side attached to said upper surface of said shell, each of said cavities has an open end formed on the bottom of said cushion.

5. The bicycle saddle as claimed in claim 1, wherein each of said cavities has a depth being proportional to the thickness of said cushion.

6. The bicycle saddle as claimed in claim 1, wherein each of said cavities has an open end formed on the side of said cushion attached to said shell.

7. The bicycle saddle as claimed in claim 1, wherein said cushion has at least one locating aperture (48) arranged on the edge thereof, and said shell has at least one locating rod (246) respectively fitted into said locating aperture of said cushion.

## Patentansprüche

1. Fahrradsattel (10), umfassend:
eine starre/halbstarre Hülle (20), die eine obere Oberfläche und eine Unterseite aufweist, wobei die Hülle (20) ein schmales vorderes Ende und ein weites hinteres Ende aufweist;
eine Schutzabdeckung (60);
eine Polsterung (40), die zwischen der Hülle (20) und der Abdeckung (60) angeordnet vorliegt, umfasst ein Kissen (44), das aus einem elastischen Material hergestellt ist, wobei das Kissen (44) mehrere Aussparungen (46) aufweist und an der oberen Oberfläche der Hülle (20) angebracht ist, so dass das Kissen (44) wie pneumatische Kissen mit Luftkissen/Luftfedern wirken, die zwischen der Hülle (20) und dem Körper des Fahrers eingefügt sind, wobei das Kissen (44) an der oberen Oberfläche des hinteren Endes angeordnet ist, wobei das Kissen (44) eine mittige Einsenkung (440) umfasst, die entlang der oberen Seite des Kissens (44) longitudinal verläuft, um das Kissen (44) in einen linken Teil und einen rechten Teil zu teilen, **dadurch gekennzeichnet, dass** jedes der Teile des Kissens (44) eine Dicke aufweist, die von der Einsenkung (440) in Richtung der abgewandten lateralen Seiten davon schrittweise größer wird.

2. Fahrradsattel nach Anspruch 1, worin die Polsterung (40) weiterhin eine Kunststoffschaumschicht (42) umfasst, die zwischen dem Kissen und der Abdeckung angeordnet vorliegt.

3. Fahrradsattel nach Anspruch 1, worin das Kissen aus einem flexiblen Kunststoffmaterial hergestellt ist.

4. Fahrradsattel nach Anspruch 1, worin das Kissen eine obere Seite aufweist, die mit der Abdeckung verbunden vorliegt und eine untere Seite, die an der oberen Oberseite der Hülle angebracht ist, wobei jede der Aussparungen ein offenes Ende aufweist, das an der Unterseite des Kissens ausgebildet vorliegt.

5. Fahrradsattel nach Anspruch 1, worin jede der Aussparungen eine Tiefe aufweist, die zu der Dicke des Kissens proportional ist.

6. Fahrradsattel nach Anspruch 1, worin jede der Aussparungen ein offenes Ende aufweist, das an der Seite des Kissens ausgebildet ist, die an der Hülle angebracht vorliegt.

7. Fahrradsattel nach Anspruch 1, worin das Kissen an der Kante davon mindestens eine Lokalisierungsöffnung (48) angeordnet aufweist, und wobei die Hülle mindestens einen Lokalisierungsstab (246) aufweist, der jeweils in die Lokalisierungsöffnung des Kissens eingepasst vorliegt.

## Revendications

1. Une selle (10) de bicyclette comprenant :
une coquille semi rigide (20) comportant une face supérieure et une face inférieure, ladite coquille (20) comportant une extrémité frontale étroite et une extrémité arrière large ;
un revêtement protecteur (60) ;
un rembourrage (40) disposé entre ladite coquille (20) et ledit revêtement (60), ledit rembourrage (40) comprenant un coussin (44) fait d'un matériau élastique, ledit coussin (44) comportant une pluralité de cavités (46), et attaché à la surface supérieure de ladite coquille (20) de sorte que ledit coussin (44) travaille comme des coussins pneumatiques avec coussins d'air /ressorts pneumatiques s'interposent entre ladite coquille (20) et le corps du cycliste, ledit coussin (44) étant disposé sur la surface supérieure de ladite extrémité arrière, ledit coussin comprenant une dépression centrale (440) courant longitudinalement le long de la face supérieure dudit coussin (44) pour diviser ledit coussin (44) en une partie gauche et une partie droite, **caractérisée en ce que** chacune desdites parties dudit coussin (44) a une épaisseur devenant graduellement plus grande à partir de ladite dépression (440) vers les faces latérales opposées de celle-ci.

2. La selle de bicyclette telle que revendiquée dans la revendication 1 dans laquelle ledit rembourrage (40) comprend en outre une couche de mousse plastique (42) disposée entre ledit coussin et ledit revêtement.

3. La selle de bicyclette telle que revendiquée dans la revendication 1 dans laquelle ledit coussin est fait d'un matériau plastique flexible.

4. La selle de bicyclette telle que revendiquée dans la revendication 1 dans laquelle ledit coussin comporte une face supérieure connectée audit revêtement et une face inférieure attachée à ladite face supérieure de ladite selle, chacune desdites cavités comportant une extrémité ouverte formée sur le fond dudit coussin.

5. La selle de bicyclette telle que revendiquée dans la revendication 1 dans laquelle chacune desdites cavités a une profondeur proportionnelle à l'épaisseur dudit coussin.

6. La selle de bicyclette telle que revendiquée dans la revendication 1 dans laquelle chacune desdites cavités comporte une extrémité ouverte formée sur le côté dudit coussin attaché à ladite selle.

7. La selle de bicyclette telle que revendiquée dans la revendication 1 dans laquelle ledit coussin comporte au moins une ouverture de positionnement (48) disposée sur le coin de celui-ci et ladite selle comporte au moins une tige de localisation (246) respectivement fixée dans ladite ouverture de positionnement dudit coussin.
